# EUROPÄISCHE PATENTSCHRIFT

(11) **EP 2 580 795 B1**
(45) Veröffentlichungstag und Bekanntmachung des Hinweises auf die Patenterteilung: **15.01.2020**
(21) Anmeldenummer: 11716207.3
(22) Anmeldetag: 15.04.2011
(51) Int. Cl.: H01M 2/20, H01M 2/32, B22D 19/14, B22F 3/26, C22C 32/00

(54) **STROMQUELLENKONTAKTIERUNGSVORRICHTUNG UND STROMQUELLE MIT METALL-INFILTRIERTER KERAMIK**
APPARATUS FOR MAKING CONTACT WITH A CURRENT SOURCE AND CURRENT SOURCE WITH A METAL-INFILTRATED CERAMIC
DISPOSITIF DE CONNEXION D'UNE SOURCE DE COURANT, ET SOURCE DE COURANT PRÉSENTANT UNE CÉRAMIQUE INFILTRÉE AVEC DU MÉTAL

(30) Priorität: 08.06.2010 DE 102010029782
(43) Veröffentlichungstag der Anmeldung: 17.04.2013
(73) Patentinhaber: Robert Bosch GmbH, 70442 Stuttgart (DE)
(72) Erfinder: GOEHLER, Jan, 70199 Stuttgart (DE)
(86) Internationale Anmeldenummer: PCT/EP2011/055989
(87) Internationale Veröffentlichungsnummer: WO 2011/154186

(56) Entgegenhaltungen:
- WO-A1-97/19774
- WO-A1-2008/052834
- DE-A1- 19 730 003
- JP-A- 2004 119 062
- US-A- 6 051 330
- US-A1- 2005 118 482
- US-A1- 2008 241 667

## Beschreibung

Die vorliegende Erfindung betrifft eine Stromquellenkontaktierungsvorrichtung, eine Stromquelle und ein Stromquellenkontaktierungssystem auf der Basis von Metall-infiltrierten Keramikkörpern sowie ein Verfahren zur Herstellung von Metall-infiltrierten Keramikkörpern, derartig hergestellte Metall-infiltrierte Keramickörper und deren Verwendung.

### Stand der Technik

Einzelne Batterie-, Akkumulator oder Brennstoffzellen-Zellen werden üblicherweise zu Packungen und Modulen zusammengeschaltet, um die durch die Zielanwendung geforderten Kapazitäten und Spannungen zu erreichen. Die Kontaktierung erfolgt dabei, je nach Ausführung der Kontaktstellen der Zellen, entweder stoffschlüssig durch Löten oder Schweißen, oder form- und/oder kraftschlüssig mittels Verdrahtung, Verklemmung oder Verschraubung der Kontakte.

Eine wesentliche Herausforderung liegt darin, im Betrieb und über die gesamte Einsatzdauer eine konstant hohe Stromtragfähigkeit und einen konstant niedrigen Übergangswiderstandswiderstand zwischen der Zelle und der Kontaktierungsvorrichtung zu gewährleisten. Temperaturschwankungen, Feuchtigkeitseinflüsse und äußere mechanische Belastungen, wie Vibrationen während der Einsatzdauer, können die Kontaktierung schwächen und zu einer Erhöhung des Übergangswiderstandes und damit einer Verringerung der Batterieleistungsfähigkeit führen.

Durch stoffschlüssige Kontaktierungen lassen sich sehr niedrige Übergangswiderstände erreichen, jedoch ist ein Austausch von einzelnen, defekten Zellen mit erheblichem Aufwand verbunden.

Kraft- und/oder formschlüssige Kontaktierungen erlauben zwar einen vereinfachten Austausch von Einzelzellen durch lösbare Kontaktierungen, jedoch können herkömmliche Kontaktwerkstoffe, wie metallisches Kupfer, Aluminium, Silber oder Gold, unter mechanischer Verspannung, beispielsweise durch eine Klemm- oder Schraubverbindung, Kriecheffekte aufweisen, welche dazu führen, dass der Übergangswiderstand an der Kontaktstelle mit der Zeit steigt. Insbesondere erhöhte Temperaturen, welche beispielsweise im Automobileinsatz vorliegen können, können die Kriecheffekte deutlich beschleunigen. Treten neben erhöhten Temperaturen auch Feuchtigkeitseinflüsse auf, so kann dies zur Korrosion der Kontaktstellen und damit zu einer weiteren Erhöhung des Übergangswiderstandes führen.

In diesem Zusammenhang ist aus der US 2005/0118482 A1 eine Kontaktierungsvorrichtung bekannt, welche zur Verbindung von Brennstoffzellen geeignet ist und aus einem Metall-Matrixkomposit besteht.

### Offenbarung der Erfindung

Gegenstand der vorliegenden Erfindung ist eine Stromquellenkontaktierungsvorrichtung zum elektrischen Kontaktieren von einer oder mehreren elektrischen Stromquellen, insbesondere zum elektrischen Zusammenschalten von mindestens zwei elektrischen Stromquellen, insbesondere Batterie-, Akkumulator- oder Brennstoffzellen-Einheiten. Erfindungsgemäß umfasst die Stromquellenkontaktierungsvorrichtung mindestens eine, aus einer Metall-infiltrierten Keramik ausgebildete Kontakteinheit zum elektrischen Kontaktieren von mindestens einem Kontaktelement einer elektrischen Stromquelle, wobei die mindestens eine Metall-infiltrierte Keramik-Kontakteinheit eine metallische Beschichtung aufweist, welche die Oberfläche der Metall-infiltrierten Keramik-Kontakteinheit teilweise oder vollständig bedeckt, und wobei die Oberfläche der metallischen Beschichtung teilweise oder vollständig mit einer Korrosionsschutzschicht bedeckt ist.

Unter einer "Metall-infiltrierten Keramik" kann im Sinn der vorliegenden Erfindung insbesondere ein Metall-Keramik-Verbundwerkstoff verstanden werden, welcher dadurch hergestellt ist, dass eine poröse, beispielsweise schwammartige und/oder gegebenenfalls vorgesinterte, Keramik beziehungsweise Keramikkörper, mit einer, insbesondere schmelzflüssigen, metallischen Komponente teilweise oder vollständig infiltriert wird. Mit anderen Worten, unter einer "Metall-infiltrierten Keramik" kann insbesondere ein Metall-Keramik-Verbundwerkstoff verstanden werden, welcher dadurch hergestellt ist, dass die Poren einer porösen, beispielsweise schwammartigen und/oder gegebenenfalls vorgesinterten, Keramik beziehungsweise Keramikkörper, teilweise oder vollständig, insbesondere durch ein Infiltrationsverfahren, mit einer, insbesondere schmelzflüssigen, metallischen Komponente teilweise oder vollständig gefüllt werden. Oder anders ausgedrückt, die Kontakteinheit beziehungsweise das später erläuterte Kontaktelement kann als ein poröser Keramikkörper mit infiltriertem Metall ausgeführt sein.

Unter einer Batterie-, Akkumulator- oder Brennstoffzellen-Einheit kann im Sinn der vorliegenden Erfindung eine einzelne Batterie-, Akkumulator- oder Brennstoffzellen-Zelle; eine Batterie-, Akkumulator- oder Brennstoffzellen-Packung/Pack aus mehreren Batterie-, Akkumulator- oder Brennstoffzellen-Zellen; oder ein Batterie-, Akkumulator- oder Brennstoffzellen-Modul aus mehreren Batterie-, Akkumulator- oder Brennstoffzellen-Packungen/Packs verstanden werden.

Insbesondere kann die erfindungsgemäße Stromquellenkontaktierungsvorrichtung zum elektrischen Kontaktieren von einer oder mehreren Batteriezellen, - packungen oder -modulen, beispielsweise für den Einsatz im Automobilbereich, ausgebildet sein.

Die metallische Komponente der Metall-infiltrierten Keramik sorgt im Rahmen der vorliegenden Erfindung vorteilhafterweise für eine hohe elektrische und thermische Leitfähigkeit.

Die keramische Komponente der Metall-infiltrierten Keramik sorgt im Rahmen der vorliegenden Erfindung, insbesondere aufgrund ihrer dreidimensionalen Netzwerkstruktur, vorteilhafterweise für eine hohe Korrosionsbeständigkeit, eine hohe Temperaturbeständigkeit (beispielsweise von bis zu 800 °C für Kupfer-infiltrierte Keramiken) und eine hohe mechanische Beständigkeit, insbesondere Druckbeständigkeit. Durch die hohe Druckbeständigkeit kann wiederum der Kriecheffekt verringert oder sogar vermieden werden.

Vorteilhafterweise können auch größere, keramische Bauteile mit komplexen Geometrien vollständig und rissfrei mit Metall infiltriert werden. Dadurch kann die Stromquellenkontaktierungsvorrichtung auch größere Metall-infiltrierte Keramik-Kontakteinheiten, insbesondere eine Kontaktbrücke beziehungsweise Kontaktplatte, umfassen, die vorteilhafterweise zusätzlich zum elektrischen Kontaktieren von mindestens einem Kontaktelement einer elektrischen Stromquelle, zum mechanischen Fixieren von mindestens einer elektrischen Stromquelle ausgebildet sind. Aufgrund der mechanischen Stabilität, insbesondere der Steifigkeit und Festigkeit, der keramischen Komponente kann dabei vorteilhafterweise der Materialeinsatz und damit die Mehrkosten und das Gewicht minimiert werden.

Im Rahmen der vorliegenden Erfindung kann die keramische Komponente der Metall-infiltrierten Keramik beispielsweise Oxid-, Nitrid- und/oder Carbid-basiert sein. Die metallische Komponente der Metall-infiltrierten Keramik ist im Rahmen der vorliegenden Erfindung vorzugsweise elektrisch hochleitfähig.

Zum Beispiel kann die mindestens eine Metall-infiltrierte Keramik-Kontakteinheit als Vorkörper (Preform) basierter Keramik-Metall-Verbundwerkstoff (P-MMC; Englisch: "preform metal matrix composite") ausgeführt sein. Dabei kann der poröse, beispielsweise schwammartige und/oder gegebenenfalls vorgesinterte, Keramikkörper einen Vorkörper (Preform) darstellen, welcher während des Herstellungsprozesses mit einer, insbesondere schmelzflüssigen, metallischen Komponente teilweise oder vollständig infiltriert wird. Insbesondere kann die Metall-infiltrierte Keramik der mindestens eine Metall-infiltrierte Keramik-Kontakteinheit durch Infiltration eines porösen Keramikvorkörpers (keramische Preform) mit einer schmelzflüssigen metallischen Komponente, beispielsweise mittels Gießpressen oder Druckguss, insbesondere mittels Gasdruckinfiltration oder Squeeze-Casting-Technologie, hergestellt sein.

Im Rahmen einer Ausführungsform der Stromquellenkontaktierungsvorrichtung ist die metallische Komponente der Metall-infiltrierten Keramik ausgewählt, aus der Gruppe, bestehend aus Kupfer, Silber, Gold, Aluminium, Eisen, Zinn und deren Legierungen, insbesondere Kupfer und Kupferlegierungen. Derartige metallische Komponenten haben sich zur Kontaktierung von Stromquellen als besonders vorteilhaft erwiesen.

Im Rahmen einer weiteren Ausführungsform der Stromquellenkontaktierungsvorrichtung ist die keramische Komponente der Metall-infiltrierten Keramik ausgewählt ist, aus der Gruppe bestehend aus Oxiden, Nitriden und Carbid von Aluminium, Titan und Silizium sowie Mischungen davon, beispielsweise Aluminiumoxid (Al₂O₃), Aluminiumnitrid (AlN), Titannitrid (TiN), Siliziumnitrid (Si₃N₄), Siliziumcarbid (SiC) und Mischungen davon. Derartige keramische Komponenten haben sich zur Ausbildung von Metall-infiltrierten Keramik-Kontakteinheit zur Kontaktierung von Stromquellen als besonders vorteilhaft erwiesen.

Insbesondere kann die Metall-infiltrierte Keramik einen spezifischen elektrischen Widerstand in einem Bereich von etwa ≥ 0,05 µΩm bis ≤ 1015 Ωm aufweisen. Der spezifische elektrische Widerstand kann vorteilhafterweise durch Variation des Anteils der metallischen Komponente und des Anteils der keramischen Komponente in der Metall-infiltrierten Keramik eingestellt werden.

Erfindungsgemäß weist die mindestens eine Metall-infiltrierte Keramik-Kontakteinheit eine metallische Beschichtung, insbesondere einen metallischen Umguss, auf, welche/r die Oberfläche der Metall-infiltrierte Keramik-Kontakteinheit teilweise oder vollständig bedeckt. Über die metallische Beschichtung beziehungsweise den metallischen Umguss kann die Kontaktierung der Metall-infiltrierten Keramik-Kontakteinheit mit einem starren oder flexiblen elektrischen Leiter erfolgen, wobei besonders niedrige Übergangswiderstände erreicht werden können. Vorteilhafterweise kann eine derartige metallische Beschichtung einen stoffschlüssigen Übergang zur metallischen Komponente der Metall-infiltrierten Keramik ausbilden. Auf diese Weise können Übergangswiderstände verringert oder sogar vermieden werden. Vorteilhafterweise können zudem durch eine elastische Vorspannung der Metall-infiltrierten Keramik Kriecheffekte ausglichen werden.

Im Rahmen einer Ausgestaltung dieser Ausführungsform der Stromquellenkontaktierungsvorrichtung ist die metallische Beschichtung, insbesondere der metallische Umguss, aus der metallischen Komponente der Metall-infiltrierten Keramik ausgebildet. Auf diese Weise kann vorteilhafterweise der Stoffschluss mit der metallischen Komponente der Metall-infiltrierten Keramik und damit die elektrische Anbindung an die metallische Komponente der Metall-infiltrierten Keramik verbessert werden.

Erfindungsgemäß ist die Oberfläche der metallischen Beschichtung, insbesondere des metallischen Umgusses, teilweise oder vollständig mit einer Schutzschicht, insbesondere einer Korrosionsschutzschicht, bedeckt. Auf diese Weise kann die Beständigkeit, insbesondere Korrosionsbeständigkeit, der metallischen Beschichtung beziehungsweise des metallischen Umgusses erhöht werden.

Grundsätzlich kann die mindestens eine Metall-infiltrierte Keramik-Kontakteinheit in jeder geeigneten Form ausgebildet sein. Insbesondere ist es möglich, dass die Stromquellenkontaktierungsvorrichtung mehrere in gleichen oder unterschiedlichen Formen ausgebildete Metall-infiltrierte Keramik-Kontakteinheiten umfasst. Beispielsweise kann die Stromquellenkontaktierungsvorrichtung eine oder mehrere plattenförmige, Metall-infiltrierte Keramik-Kontakteinheiten umfassen. Diese können dabei unterschiedliche Größen aufweisen. Beispielsweise kann die Stromquellenkontaktierungsvorrichtung mindestens eine, insbesondere plattenförmige, Metall-infiltrierte Keramik-Kontaktbrücke zum elektrischen Kontaktieren, insbesondere zur Reihen- oder Parallelschaltung, von zwei elektrischen Stromquellen umfassen. Die Kontaktbrücke kann dabei das Kontaktelement des negativen Pols der ersten Stromquelle und das Kontaktelement des positiven Pols der zweiten Stromquelle (Reihenschaltung) oder das Kontaktelement des negativen Pols der ersten Stromquelle und das Kontaktelement des negativen Pols der zweiten Stromquelle (Parallelschaltung) elektrisch Kontaktieren/Zusammenschalten. Darüber hinaus kann die Stromquellenkontaktierungsvorrichtung, zum Beispiel im Fall einer Reihenschaltung, mindestens zwei weitere, insbesondere plattenförmige, Metall-infiltrierte Keramik-Kontakteinheiten umfassen, wobei die erste Kontakteinheit zum elektrischen Kontaktieren des Kontaktelements des positiven Pols der ersten Stromquelle und die zweite Kontakteinheit zum elektrischen Kontaktieren des Kontaktelement des negativen Pols der zweite Stromquelle ausgebildet ist. Im Fall einer Parallelschaltung, kann die Stromquellenkontaktierungsvorrichtung zum Beispiel darüber hinaus mindestens eine weitere, insbesondere plattenförmige, Metall-infiltrierte Keramik-Kontakteinheit umfassen, welche zum elektrischen Kontaktieren des Kontaktelements des positiven Pols der ersten Stromquelle und des Kontaktelements des positiven Pols der zweiten Stromquelle elektrisch Kontaktieren/Zusammenschalten ausgebildet ist.

Im Rahmen einer weiteren Ausführungsform der Stromquellenkontaktierungsvorrichtung ist die mindestens eine Metall-infiltrierte Keramik-Kontakteinheit in Form eines Teils einer Schwalbenschwanzverbindung, insbesondere Schwalbenschwanz-Nut-förmig, ausgebildet. Beispielsweise kann die Kontakteinheit dabei als eine Schwalbenschwanz-Nut ausgebildet sein, welche zu einem Schwalbenschwanz-Feder-förmigen Kontaktelement einer elektrischen Stromquelle korrespondiert. Dies hat den Vorteil einer schnell wieder lösbaren Verbindung und ist insbesondere zum elektrischen Kontaktieren und mechanischen Fixieren von einer Vielzahl von Stromquellen, beispielsweise in Form von Batteriemodulen, beispielsweise in Fahrzeugbereich, vorteilhaft.

Im Rahmen einer weiteren Ausführungsform der Stromquellenkontaktierungsvorrichtung umfasst die Stromquellenkontaktierungsvorrichtung mindestens eine Verbindungseinrichtung zum kraft- und/oder formschlüssigen Verbinden von einer oder mehreren Metall-infiltrierten Keramik-Kontakteinheiten mit einem oder mehreren Stromquellen-Kontaktelementen. Vorzugsweise ist die Verbindungseinrichtung eine lösbare Verbindungseinrichtung zum lösbaren, kraft- und/oder formschlüssigen Verbinden von einer oder mehreren Metall-infiltrierten Keramik-Kontakteinheiten mit einem oder mehreren Stromquellen-Kontaktelementen. Die Verbindungseinrichtung kann beispielsweise eine Klemmverbindungseinrichtung, eine Schraubverbindungseinrichtung oder eine Schwalbenschwanzverbindungseinrichtung sein. Beispielsweise kann die Verbindungseinrichtung dazu ausgebildet sein auf eine in Form eines Teils einer Schwalbenschwanzverbindung ausgebildete, Metall-infiltrierte Keramik-Kontakteinheit derart ein Kraft aufzubringen, dass die Kontakteinheit mit einem in Form des korrespondierenden Schwalbenschwanzverbindungsteils ausgebildeten Kontaktelement einer Stromquelle kraft- und formschlüssig verbunden wird.

Ein weiterer Gegenstand der vorliegenden Erfindung ist eine elektrische Stromquelle, insbesondere Batterie-, Akkumulator- oder Brennstoffzellen-Einheit, welche mindestens ein, aus einer Metall-infiltrierten Keramik ausgebildetes Kontaktelement zum Übertragen des Stroms der Stromquelle umfasst.

Wie bereits im Zusammenhang mit der erfindungsgemäßen Stromquellenkontaktierungsvorrichtung erläutert, sorgt die metallische Komponente der Metall-infiltrierten Keramik dabei für eine hohe elektrische und thermische Leitfähigkeit, wobei die keramische Komponente der Metall-infiltrierten Keramik für eine hohe Korrosionsbeständigkeit, eine hohe Temperaturbeständigkeit und eine hohe mechanische Stabilität und Beständigkeit, insbesondere Druckbeständigkeit, und damit eine vorteilhafte Verringerung oder sogar Vermeidung von Kriecheffekten, sorgt.

Derartige Stromquellen können zusammen mit einer erfindungsgemäßen Stromquellenkontaktierungsvorrichtung ein besonders vorteilhaftes Stromquellenkontaktierungssystem bilden.

Insbesondere kann die erfindungsgemäße Stromquelle eine Batteriezelle, eine Batteriepackung oder ein Batteriemodul sein.

Das mindestens eine Metall-infiltrierte Keramik-Kontaktelement kann zum Beispiel als Vorkörper (Preform) basierter Keramik-Metall-Verbundwerkstoff (P-MMC; Englisch: "preform metal matrix composite"). (P-MMC; Englisch: "preform metal matrix composite") ausgeführt sein. Dabei kann der poröse, beispielsweise schwammartige und/oder gegebenenfalls vorgesinterte, Keramikkörper einen Vorkörper (Preform) darstellen, welcher während des Herstellungsprozesses mit einer, insbesondere schmelzflüssigen, metallischen Komponente teilweise oder vollständig infiltriert wird. Insbesondere kann die Metall-infiltrierte Keramik des mindestens einen Metall-infiltrierte Keramik-Kontaktelements durch Infiltration eines porösen Keramikvorkörpers (keramische Preform) mit einer schmelzflüssigen metallischen Komponente, beispielsweise mittels Gießpressen oder Druckguss, insbesondere mittels Gasdruckinfiltration oder Squeeze-Casting-Technologie, hergestellt sein.

Im Rahmen einer Ausführungsform der erfindungsgemäßen Stromquelle ist die metallische Komponente der Metall-infiltrierten Keramik ausgewählt, aus der Gruppe, bestehend aus Kupfer, Silber, Gold, Aluminium, Eisen, Zinn und deren Legierungen, insbesondere Kupfer und Kupferlegierungen. Derartige metallische Komponenten haben sich zur Kontaktierung der Stromquelle als besonders vorteilhaft erwiesen.

Im Rahmen einer weiteren Ausführungsform der erfindungsgemäßen Stromquelle ist die keramische Komponente der Metall-infiltrierten Keramik ausgewählt, aus der Gruppe bestehend aus Oxiden, Nitriden und Carbid von Aluminium, Titan und Silizium sowie Mischungen davon, beispielsweise Aluminiumoxid (Al₂O₃), Aluminiumnitrid (AIN), Titannitrid (TiN), Siliziumnitrid (Si₃N₄), Siliziumcarbid (SiC) und Mischungen davon. Derartige keramische Komponenten haben sich zur Ausbildung von Metall-infiltrierten Keramik-Kontaktelementen zum Übertragen des Stroms einer Stromquelle als besonders vorteilhaft erwiesen.

Insbesondere kann die Metall-infiltrierte Keramik einen spezifischen elektrischen Widerstand in einem Bereich von etwa ≥ 0,05 µΩm bis ≤ 1015 Ωm aufweisen. Der spezifische elektrische Widerstand kann vorteilhafterweise durch Variation des Anteils der metallischen Komponente und des Anteils der keramischen Komponente in der Metall-infiltrierten Keramik eingestellt werden.

Die erfindungsgemäße Stromquelle weist mindestens eine Metall-infiltrierte Keramik-Kontaktelement eine metallische Beschichtung, insbesondere einen metallischen Umguss, auf, welche/r die Oberfläche des Metall-infiltrierte Keramik-Kontaktelements zumindest teilweise bedeckt. Über die metallische Beschichtung beziehungsweise den metallischen Umguss kann die Kontaktierung des Metall-infiltrierten Keramik-Kontaktelements mit einem starren oder flexiblen elektrischen Leiters erfolgen, wobei besonders niedrige Übergangswiderstände erreicht werden können. Vorteilhafterweise kann eine derartige metallische Beschichtung einen stoffschlüssigen Übergang zur metallischen Komponente der Metall-infiltrierten Keramik ausbilden. Auf diese Weise können Übergangswiderstände verringert oder sogar vermieden werden. Vorteilhafterweise können zudem durch eine elastische Vorspannung der Metall-infiltrierten Keramik Kriecheffekte ausglichen werden.

Im Rahmen einer weiteren Ausführungsform der erfindungsgemäßen Stromquelle ist die metallische Beschichtung, insbesondere der metallische Umguss, aus der metallischen Komponente der Metall-infiltrierten Keramik ausgebildet. Auf diese Weise kann vorteilhafterweise der Stoffschluss mit der metallischen Komponente der Metall-infiltrierten Keramik und damit die elektrische Anbindung an die metallische Komponente der Metall-infiltrierten Keramik verbessert werden.

Im Rahmen der erfindungsgemäßen Ausführungsform der erfindungsgemäßen Stromquelle ist die Oberfläche der metallischen Beschichtung, insbesondere des metallischen Umgusses, teilweise oder vollständig mit Korrosionsschutzschicht bedeckt. Auf diese Weise kann die Beständigkeit, insbesondere Korrosionsbeständigkeit, der metallischen Beschichtung beziehungsweise des metallischen Umgusses erhöht werden.

Grundsätzlich kann das mindestens eine Metall-infiltrierte Keramik-Kontaktelement in jeder geeigneten Form ausgebildet sein. Beispielsweise kann das mindestens eine Metall-infiltrierte Keramik-Kontaktelement bolzenförmig oder plattenförmig ausgebildet sein.

Im Rahmen einer weiteren Ausführungsform der Stromquelle ist das mindestens eine Metall-infiltrierte Keramik-Kontaktelement in Form eines Teils einer Schwalbenschwanzverbindung, insbesondere Schwalbenschwanz-Feder-förmig, ausgebildet. Beispielsweise kann das Kontaktelement dabei als eine Schwalbenschwanz-Feder ausgebildet sein, welche zu einer Schwalbenschwanz-Nut-förmigen Kontakteinheit einer Stromquellenkontaktierungsvorrichtung korrespondiert. Dies hat den Vorteil einer schnell wieder lösbaren Verbindung und ist insbesondere zum elektrischen Kontaktieren und mechanischen Fixieren von einer Vielzahl von Stromquellen, beispielsweise in Form von Batteriemodulen, beispielsweise in Fahrzeugbereich, vorteilhaft.

Hinsichtlich weiterer Vorteile und Merkmale der erfindungsgemäßen Stromquelle wird hiermit explizit auf die Erläuterungen im Zusammenhang mit der erfindungsgemäßen Stromquellenkontaktierungsvorrichtung verwiesen.

Ein weiterer Gegenstand der vorliegenden Erfindung ist ein Stromquellenkontaktierungssystem, welches mindestens eine Stromquellenkontaktierungsvorrichtung und mindesten eine Stromquelle umfasst, wobei das Stromquellenkontaktierungssystem mindestens eine erfindungsgemäße Stromquellenkontaktierungsvorrichtung und/oder mindestens eine erfindungsgemäße Stromquelle umfasst.

Hinsichtlich der Vorteile und weiterer Merkmale des erfindungsgemäßen Stromquellenkontaktierungssystems wird hiermit explizit auf die Erläuterungen im Zusammenhang mit der erfindungsgemäßen Stromquellenkontaktierungsvorrichtung und Stromquelle verwiesen.

Darüber hinaus betrifft die vorliegende Erfindung ein Verfahren zur Herstellung eines Metall-infiltrierten Keramikkörpers, insbesondere einer Metall-infiltrierten Keramik-Kontakteinheit für eine erfindungsgemäße Stromquellenkontaktierungsvorrichtung und/oder eines Metall-infiltrierten Keramik-Kontaktelements für eine erfindungsgemäße, elektrische Stromquelle, umfassend die Verfahrensschritt:
a) Herstellen eines porösen Keramikvorkörpers (keramische Preform) aus einer keramischen Komponente,
b) Infiltrieren des porösen Keramikvorkörpers mit einer schmelzflüssigen metallischen Komponente.

Die metallische Komponente kann dabei insbesondere ausgewählt sein aus der Gruppe, bestehend aus Kupfer, Silber, Gold, Aluminium, Eisen, Zinn und deren Legierungen, insbesondere Kupfer und Kupferlegierungen. Die keramische Komponente kann dabei insbesondere ausgewählt sein, aus der Gruppe bestehend aus Oxiden, Nitriden und Carbid von Aluminium, Titan und Silizium sowie Mischungen davon, beispielsweise Aluminiumoxid (Al₂O₃), Aluminiumnitrid (AIN), Titannitrid (TiN), Siliziumnitrid (Si₃N₄), Siliziumcarbid (SiC) und Mischungen davon. Das Infiltrieren kann dabei beispielsweise mittels Gießpressen oder Druckguss, insbesondere mittels Gasdruckinfiltration oder Squeeze-Casting-Technologie, erfolgen.

Im Rahmen einer Ausführungsform des erfindungsgemäßen Verfahrens umfasst das Verfahren weiterhin den Verfahrensschritt:
c) Beschichten des Metall-infiltrierten Keramikkörpers mit einer metallischen Beschichtung, insbesondere einem metallischen Umguss, welche/r die Oberfläche des Metall-infiltrierte Keramik-Körpers teilweise oder vollständig bedeckt.

Im Rahmen einer Ausgestaltung dieser Ausführungsform des erfindungsgemäßen Verfahrens wird die metallische Beschichtung, insbesondere der metallische Umguss, aus der metallischen Komponente der Metall-infiltrierten Keramik ausgebildet.

Im Rahmen einer weiteren Ausführungsform des erfindungsgemäßen Verfahrens umfasst das Verfahren weiterhin den Verfahrensschritt:
d) Beschichten der Oberfläche der metallischen Beschichtung, insbesondere des metallischen Umgusses, mit einer Korrosionsschutzschicht, welche die Oberfläche der metallische Beschichtung teilweise oder vollständig, bedeckt.

Hinsichtlich der Vorteile und weiterer Merkmale des erfindungsgemäßen Herstellungsverfahrens wird hiermit explizit auf die Erläuterungen im Zusammenhang mit der erfindungsgemäßen Stromquellenkontaktierungsvorrichtung und Stromquelle sowie mit dem erfindungsgemäßen Stromquellenkontaktierungssystem verwiesen.

Hinsichtlich der Vorteile und weiterer Merkmale des erfindungsgemäßen Metall-infiltrierte Keramikkörpers wird hiermit explizit auf die Erläuterungen im Zusammenhang mit der erfindungsgemäßen Stromquellenkontaktierungsvorrichtung und Stromquelle sowie mit dem erfindungsgemäßen Stromquellenkontaktierungssystem und Herstellungsverfahren verwiesen.

Ferner betrifft die vorliegende Erfindung die Verwendung eines Metall-infiltrierten Keramikkörpers, insbesondere eines erfindungsgemäß hergestellten Metall-infiltrierte Keramikkörpers, insbesondere dessen metallische Komponente ausgewählt ist aus der Gruppe, bestehend aus Kupfer, Silber, Gold, Aluminium, Eisen, Zinn und deren Legierungen, insbesondere Kupfer und Kupferlegierungen und dessen keramische Komponente ausgewählt ist, aus der Gruppe bestehend aus Oxiden, Nitriden und Carbid von Aluminium, Titan und Silizium sowie Mischungen davon, beispielsweise Aluminiumoxid (Al₂O₃), Aluminiumnitrid (AlN), Titannitrid (TiN), Siliziumnitrid (Si₃N₄), Siliziumcarbid (SiC) und Mischungen davon, als stromübertragendes Bauteil und/oder zur Kontaktierung von elektrischen Bauteilen.

Hinsichtlich der Vorteile und weiterer Merkmale der erfindungsgemäßen Verwendung wird hiermit explizit auf die Erläuterungen im Zusammenhang mit der erfindungsgemäßen Stromquellenkontaktierungsvorrichtung und Stromquelle sowie mit dem erfindungsgemäßen Stromquellenkontaktierungssystem, Herstellungsverfahren und Metall-infiltrierte Keramikkörper verwiesen.

### Zeichnungen und Beispiele

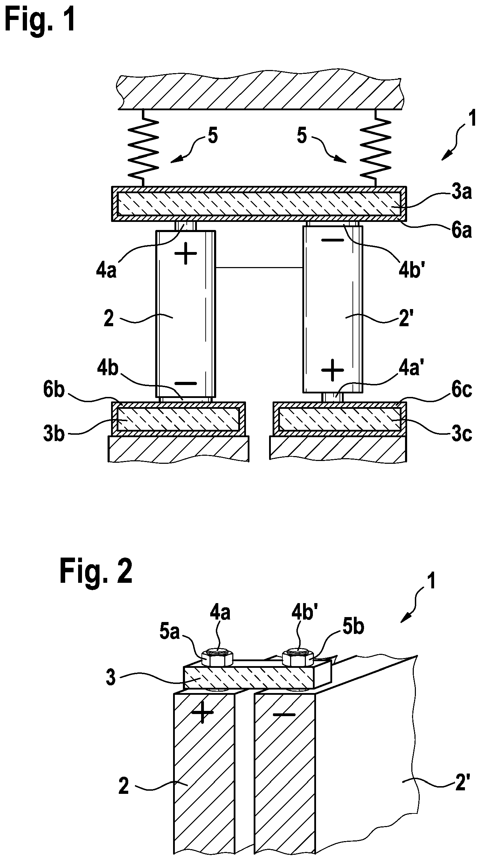

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine erste Ausführungsform eines erfindungsgemäßen Stromquellenkontaktierungssystems, welches eine erste Ausführungsform einer erfindungsgemäßen Stromquellenkontaktierungsvorrichtung und eine erste Ausführungsform einer erfindungsgemäßen Stromquelle umfasst;
- Fig. 2: einen schematischen Querschnitt durch eine zweite Ausführungsform eines erfindungsgemäßen Stromquellenkontaktierungssystems, welches eine zweite Ausführungsform einer erfindungsgemäßen Stromquellenkontaktierungsvorrichtung und eine zweite Ausführungsform einer erfindungsgemäßen Stromquelle umfasst; und

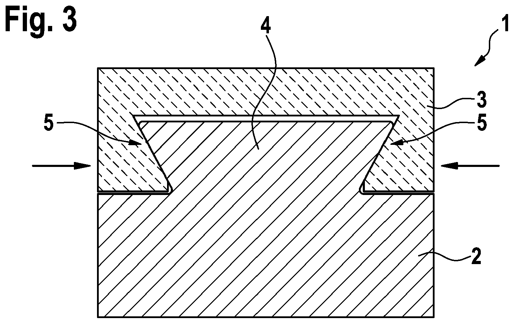

- Fig. 3: einen schematischen Querschnitt durch eine dritte Ausführungsform eines erfindungsgemäßen Stromquellenkontaktierungssystems, welches eine dritte Ausführungsform einer erfindungsgemäßen Stromquellenkontaktierungsvorrichtung und eine dritte Ausführungsform einer erfindungsgemäßen Stromquelle umfasst.

Figur 1 zeigt zwei Stromquellen 2, 2', insbesondere Batteriezellen, gemäß einer ersten Ausführungsform einer erfindungsgemäßen Stromquelle, welche jeweils zwei, aus einer Metall-infiltrierten Keramik ausgebildete, plattenförmige Kontaktelemente 4a, 4b, 4a', 4b' umfassen. Figur 1 zeigt darüber hinaus eine erste Ausführungsform einer erfindungsgemäßen Stromquellenkontaktierungsvorrichtung 1, welche drei, plattenförmige, aus einer Metall-infiltrierten Keramik ausgebildete Kontakteinheit 3a, 3b, 3c zum elektrischen Kontaktieren der vier Kontaktelemente 4a, 4b, 4a', 4b' der zwei elektrischen Stromquellen 2, 2' umfasst. Figur 1 veranschaulicht, dass die Stromquellen 2, 2' und die Stromquellenkontaktierungsvorrichtung 1 dabei eine erste Ausführungsform eines erfindungsgemäßen Stromquellenkontaktierungssystems 1, 2, 2' bilden.

Figur 1 zeigt, dass die Kontakteinheit 3a als Metall-infiltrierte Keramik-Kontaktbrücke ausgebildet ist, das Kontaktelement 4a des positiven Pols der ersten Stromquelle 2 und das Kontaktelement 4b' des negativen Pols der zweiten Stromquelle 2' elektrisch kontaktiert und auf diese Weise die beiden Stromquellen 2, 2' in Reihe schaltet. Die zwei weiteren Kontakteinheiten 3b und 3c kontaktieren dabei das Kontaktelement 4b des negativen Pols der ersten Stromquelle 2 und das Kontaktelement 4a' des positiven Pols der zweite Stromquelle 2'. Figur 1 zeigt weiterhin, dass die Kontakteinheiten 3a, 3b, 3c jeweils eine, die Oberfläche vollständig bedeckende, metallische Beschichtung 6a, 6b, 6c aufweisen. Figur 1 zeigt ferner, dass die Stromquellenkontaktierungsvorrichtung 1 eine Klemmverbindungseinrichtung 5 zum kraftschlüssigen Verbinden der Metall-infiltrierten Keramik-Kontakteinheiten 3a, 3b, 3c mit den Kontaktelementen 4a, 4b, 4a', 4b' der Stromquellen 2, 2' umfasst.

Figur 2 zeigt zwei Stromquellen 2, 2', insbesondere prismatische Batteriezellen, gemäß einer zweiten Ausführungsform einer erfindungsgemäßen Stromquelle, welche jeweils ein, aus einer Metall-infiltrierten Keramik ausgebildetes, bolzenförmiges Kontaktelement 4a, 4b' umfassen. Figur 1 zeigt darüber hinaus eine zweite Ausführungsform einer erfindungsgemäßen Stromquellenkontaktierungsvorrichtung 1, welche eine, aus einer Metall-infiltrierten Keramik ausgebildete Kontakteinheit 3 umfasst. Die Kontakteinheit 3 ist dabei in Form einer, im Wesentlichen plattenförmigen Kontaktbrücke ausgebildet, welche über Aussparungen zur Aufnahme der bolzenförmigen Kontaktelemente 4a, 4b' der Stromquellen 2, 2' verfügt. Figur 2 zeigt weiterhin, dass die Stromquellenkontaktierungsvorrichtung 1 zwei Schraubverbindungseinrichtungen 5a, 5b, insbesondere Gewindemuttern, zum kraft- und formschlüssigen Verbinden der Metall-infiltrierten Keramik-Kontakteinheit 3 mit den Kontaktelementen 4a, 4b' der Stromquellen 2, 2' umfasst. Figur 2 veranschaulicht ferner, dass die Stromquellen 2, 2' und die Stromquellenkontaktierungsvorrichtung 1 dabei eine zweite Ausführungsform eines erfindungsgemäßen Stromquellenkontaktierungssystems 1, 2, 2' bilden.

Figur 3 zeigt eine Stromquelle 2, insbesondere Batteriezellen, gemäß einer dritten Ausführungsform einer erfindungsgemäßen Stromquelle, welche ein, aus einer Metall-infiltrierten Keramik ausgebildetes, Schwalbenschwanz-Federförmiges Kontaktelement 4 umfasst. Figur 1 zeigt darüber hinaus eine dritte Ausführungsform einer erfindungsgemäßen Stromquellenkontaktierungsvorrichtung 1, welche eine, aus einer Metall-infiltrierten Keramik ausgebildete, korrespondierend Schwalbenschwanz-Nut-förmige Kontakteinheit 3 umfasst. Figur 3 veranschaulicht ferner, dass die Stromquellen 2 und die Stromquellenkontaktierungsvorrichtung 1 dabei eine dritte Ausführungsform eines erfindungsgemäßen Stromquellenkontaktierungssystems 1, 2 bilden.

Die Kontaktierung erfolgt im Rahmen dieser Ausführungsformen durch Einschieben des Schwalbenschwanz-Feder-förmigen Kontaktelements 4 in die Schwalbenschwanz-Nut-förmige Kontakteinheit 3 und anschließendes Fixieren des Kontaktelements 3 in der Kontakteinheit 4 mittels einer von außen, aufgebrachte Kraft (durch Pfeile dargestellt). Zum Aufbringen dieser Kraft umfasst die Stromquellenkontaktierungsvorrichtung 1 eine Schwalbenschwanzverbindungseinrichtung 5, welche dazu ausgebildet ist auf die Schwalbenschwanz-Nut-förmige Kontakteinheit 3 und das darin angeordnete, Schwalbenschwanz-Feder-förmige Kontaktelement 4 derart ein Kraft aufzubringen, dass die Kontakteinheit 3 mit dem Kontaktelement 4 kraft- und formschlüssig verbunden wird. Durch dieses Schwalbenschwanzprinzip kann vorteilhafterweise ein komplettes Batteriemodul sowohl elektrisch als auch mechanisch an einen Verbraucher angekoppelt werden.

## Patentansprüche

1. Stromquellenkontaktierungsvorrichtung (1) zum elektrischen Kontaktieren von einer oder mehreren elektrischen Stromquellen (2, 2'), insbesondere zum elektrischen Zusammenschalten von mindestens zwei elektrischen Stromquellen (2, 2'), insbesondere Batterie-, Akkumulator- oder Brennstoffzellen-Einheiten,
wobei
die Stromquellenkontaktierungsvorrichtung (1) mindestens eine, aus einer Metallinfiltrierten Keramik ausgebildete Kontakteinheit (3a, 3b, 3c; 3) zum elektrischen Kontaktieren von mindestens einem Kontaktelement (4a, 4b, 4a', 4b'; 4) einer elektrischen Stromquelle (2, 2') umfasst und
die mindestens eine Metall-infiltrierte Keramik-Kontakteinheit (3a, 3b, 3c; 3) eine metallische Beschichtung (6a, 6b, 6c) aufweist, welche die Oberfläche der Metall-infiltrierten Keramik-Kontakteinheit (3a, 3b, 3c; 3) teilweise oder vollständig bedeckt
**dadurch gekennzeichnet, dass**
die Oberfläche der metallischen Beschichtung (6a, 6b, 6c) teilweise oder vollständig mit einer Korrosionsschutzschicht bedeckt ist.

2. Stromquellenkontaktierungsvorrichtung (1) nach Anspruch 1, **dadurch gekennzeichnet, dass**
- die metallische Komponente der Metall-infiltrierten Keramik ausgewählt ist, aus der Gruppe, bestehend aus Kupfer, Silber, Gold, Aluminium, Eisen, Zinn und deren Legierungen, insbesondere Kupfer und Kupferlegierungen, und/oder
- die keramische Komponente der Metall-infiltrierten Keramik ausgewählt ist. aus der Gruppe bestehend aus Oxiden, Nitriden und Carbid von Aluminium, Titan und Silizium sowie Mischungen davon, insbesondere Aluminiumoxid, Aluminiumnitrid, Titannitrid, Siliziumnitrid, Siliziumcarbid und Mischungen davon.

3. Stromquellenkontaktierungsvorrichtung (1) nach Anspruch 1 oder 2,
**dadurch gekennzeichnet, dass** die mindestens eine Metall-infiltrierte Keramik-Kontakteinheit (3) in Form eines Teils einer Schwalbenschwanzverbindung, insbesondere Schwalbenschwanz-Nut-förmig, ausgebildet ist.

4. Stromquellenkontaktierungsvorrichtung (1) nach einem der Ansprüche 1 bis 3, **dadurch gekennzeichnet, dass** die Stromquellenkontaktierungsvorrichtung (1) mindestens eine Verbindungseinrichtung (5; 5a, 5b) zum kraft- und/oder formschlüssigen Verbinden von einer oder mehreren Metall-infiltrierten Keramik-Kontakteinheiten (3) mit einem oder mehreren Stromquellen-Kontaktelementen (4) umfasst.

5. Stromquellenkontaktierungsvorrichtung (1) nach einem der Ansprüche 1 bis 4, **dadurch gekennzeichnet, dass** die metallische Beschichtung (6a, 6b, 6c) aus der metallischen Komponente der Metall-infiltrierten Keramik ausgebildet ist.

6. Elektrische Stromquelle (2, 2'), insbesondere Batterie-, Akkumulator- oder Brennstoffzellen- Einheit,
wobei die Stromquelle (2, 2') mindestens ein, aus einer Metall-infiltrierten Keramik ausgebildetes Kontaktelement (4a, 4b, 4a', 4b'; 4) zum Übertragen des Stroms der Stromquelle (2, 2') umfasst und
das mindestens eine Metall-infiltrierte Keramik-Kontaktelement (4a, 4b, 4a', 4b'; 4) eine metallische Beschichtung aufweist, welche die Oberfläche des Metall-infiltrierten Keramik-Kontaktelements (4a, 4b, 4a', 4b'; 4) zumindest teilweise bedeckt
**dadurch gekennzeichnet, dass**
die Oberfläche der metallischen Beschichtung teilweise oder vollständig mit einer Korrosionsschutzschicht bedeckt ist.

7. Stromquelle (2, 2') nach Anspruch 6, **dadurch gekennzeichnet, dass**
- die metallische Komponente der Metall-infiltrierten Keramik ausgewählt ist, aus der Gruppe, bestehend aus Kupfer, Silber, Gold, Aluminium, Eisen, Zinn und deren Legierungen, insbesondere Kupfer und Kupferlegierungen, und/oder
- die keramische Komponente der Metall-infiltrierten Keramik ausgewählt ist, aus der Gruppe bestehend aus Oxiden, Nitriden und Carbid von Aluminium, Titan und Silizium sowie Mischungen davon, insbesondere Aluminiumoxid, Aluminiumnitrid, Titannitrid, Siliziumnitrid, Siliziumcarbid und Mischungen davon.

8. Stromquelle (2, 2') nach Anspruch 6 oder 7, **dadurch gekennzeichnet, dass** das mindestens eine Metall-infiltrierte Keramik-Kontaktelement (4) in Form eines Teils einer Schwalbenschwanzverbindung, insbesondere Schwalbenschwanz-Nut-Feder-förmig, ausgebildet ist.

9. Stromquelle nach einem der Ansprüche 6 bis 8, **dadurch gekennzeichnet, dass**
die metallische Beschichtung aus der metallischen Komponente der Metall- infiltrierten Keramik ausgebildet ist.

10. Stromquellenkontaktierungssystem (1, 2, 2'), umfassend mindestens eine Stromquellenkontaktierungsvorrichtung (1) und mindestens eine Stromquelle (2, 2'), **dadurch gekennzeichnet, dass** das Stromquellenkontaktierungssystem (1, 2, 2')
- mindestens eine Stromquellenkontaktierungsvorrichtung (1) nach einem der Ansprüche 1 bis 5 und/oder
- mindestens eine Stromquelle (2, 2') nach einem der Ansprüche 6 bis 9 umfasst.

11. Verfahren zur Herstellung einer Metall-infiltrierten Keramik-Kontakteinheit (3a, 3b, 3c; 3) für eine Stromquellenkontaktierungsvorrichtung (1) nach einem der Ansprüche 1 bis 5 und/oder eines Metall-infiltrierten Keramik-Kontaktelements (4a, 4b, 4a', 4b'; 4) für eine elektrische Stromquelle (2, 2') nach einem der Ansprüche 6 bis 9, umfassend die Verfahrensschritte:
a) Herstellen eines porösen Keramikvorkörpers aus einer keramischen Komponente,
b) Infiltrieren des porösen Keramikvorkörpers, beispielsweise mittels Gießpressen oder Druckguss, insbesondere mittels Gasdruckinfiltration oder Squeeze-Casting-Technologie, mit einer schmelzflüssigen metallischen Komponente,
c) Beschichten des Metall-infiltrierten Keramik-Körpers mit einer metallischen Beschichtung, welche die Oberfläche des Metall-infiltrierte Keramik-Körpers teilweise oder vollständig bedeckt
d) Beschichten der Oberfläche der metallischen Beschichtung mit einer Korrosionsschutzschicht, welche die Oberfläche der metallischen Beschichtung teilweise oder vollständig bedeckt.

12. Verfahren nach Anspruch 11, **dadurch gekennzeichnet, dass**
- die metallische Komponente ausgewählt ist aus der Gruppe, bestehend aus Kupfer, Silber, Gold, Aluminium, Eisen, Zinn und deren Legierungen, insbesondere Kupfer und Kupferlegierungen.
- die keramische Komponente ausgewählt aus der Gruppe bestehend aus Oxiden, Nitriden und Carbid von Aluminium, Titan und Silizium sowie Mischungen davon, insbesondere Aluminiumoxid, Aluminiumnitrid, Titannitrid, Siliziumnitrid, Siliziumcarbid und Mischungen davon.
- die metallische Beschichtung aus der metallischen Komponente der Metall-infiltrierten Keramik ausgebildet.

## Claims

1. Current source contacting apparatus (1) for electrically contacting one or a plurality of electric current sources (2, 2'), in particular for electrically interconnecting at least two electric current sources (2, 2'), in particular battery, rechargeable battery or fuel cell units, wherein
the current source contacting apparatus (1) comprises at least one contact unit (3a, 3b, 3c; 3) formed from a metal-infiltrated ceramic and serving for electrically contacting at least one contact element (4a, 4b, 4a', 4b'; 4) of an electric current source (2, 2'), and
the at least one metal-infiltrated ceramic contact unit (3a, 3b, 3c; 3) has a metallic coating (6a, 6b, 6c), which partly or completely covers the surface of the metal-infiltrated ceramic contact unit (3a, 3b, 3c; 3)
**characterized in that**
the surface of the metallic coating (6a, 6b, 6c) is partly or completely covered with an anti-corrosion protective layer.

2. Current source contacting apparatus (1) according to Claim 1, **characterized in that**
- the metallic component of the metal-infiltrated ceramic is selected from the group consisting of copper, silver, gold, aluminium, iron, tin and alloys thereof, in particular copper and copper alloys, and/or
- the ceramic component of the metal-infiltrated ceramic is selected from the group consisting of oxides, nitrides and carbide of aluminium, titanium and silicon and mixtures thereof, in particular aluminium oxide, aluminium nitride, titanium nitride, silicon nitride, silicon carbide and mixtures thereof.

3. Current source contacting apparatus (1) according to Claim 1 or 2, **characterized in that** the at least one metal-infiltrated ceramic contact unit (3) is embodied in the form of a part of a dovetail connection, in particular in a manner shaped as a dovetail groove.

4. Current source contacting apparatus (1) according to any of Claims 1 to 3, **characterized in that** the current source contacting apparatus (1) comprises at least one connection device (5; 5a, 5b) for connecting one or a plurality of metal-infiltrated ceramic contact units (3) to one or a plurality of current source contact elements (4) in a force-locking and/or positively locking manner.

5. Current source contacting apparatus (1) according to any of Claims 1 to 4, **characterized in that** the metallic coating (6a, 6b, 6c) is formed from the metallic component of the metal-infiltrated ceramic.

6. Electric current source (2, 2'), in particular battery, rechargeable battery or fuel cell unit, wherein the current source (2, 2') comprises at least one contact element (4a, 4b, 4a', 4b'; 4) formed from a metal-infiltrated ceramic and serving for transmitting the current of the current source (2, 2'), and
the at least one metal-infiltrated ceramic contact element (4a, 4b, 4a', 4b'; 4) has a metallic coating, which at least partly covers the surface of the metal-infiltrated ceramic contact element (4a, 4b, 4a', 4b'; 4),
**characterized in that**
the surface of the metallic coating is partly or completely covered with an anti-corrosion protective layer.

7. Current source (2, 2') according to Claim 6, **characterized in that**
- the metallic component of the metal-infiltrated ceramic is selected from the group consisting of copper, silver, gold, aluminium, iron, tin and alloys thereof, in particular copper and copper alloys, and/or
- the ceramic component of the metal-infiltrated ceramic is selected from the group consisting of oxides, nitrides and carbide of aluminium, titanium and silicon and mixtures thereof, in particular aluminium oxide, aluminium nitride, titanium nitride, silicon nitride, silicon carbide and mixtures thereof.

8. Current source (2, 2') according to Claim 6 or 7, **characterized in that** the at least one metal-infiltrated ceramic contact element (4) is embodied in the form of a part of a dovetail connection, in particular in a manner shaped as a dovetail tongue and groove.

9. Current source according to any of Claims 6 to 8, **characterized in that** the metallic coating is formed from the metallic component of the metal-infiltrated ceramic.

10. Current source contacting system (1, 2, 2'), comprising at least one current source contacting apparatus (1) and at least one current source (2, 2'), **characterized in that** the current source contacting system (1, 2, 2') comprises
at least one current source contacting apparatus (1) according to any of Claims 1 to 5 and/or
at least one current source (2, 2') according to any of Claims 6 to 9.

11. Method for producing a metal-infiltrated ceramic contact unit (3a, 3b, 3c; 3) for a current source contacting apparatus (1) according to any of Claims 1 to 5 and/or a metal-infiltrated ceramic contact element (4a, 4b, 4a', 4b' 4) for an electric current source (2, 2') according to any of Claims 6 to 9, comprising the following method steps:
a) producing a porous ceramic preform made from a ceramic component,
b) infiltrating the porous ceramic preform with a fusible metallic component, for example by means of die casting or pressing casting, in particular by means of gas pressure infiltration or squeeze casting technology,
c) coating the metal-infiltrated ceramic body with a metallic coating, which partly or completely covers the surface of the metal-infiltrated ceramic body,
d) coating the surface of the metallic coating with an anti-corrosion protective layer, which partly or completely covers the surface of the metallic coating.

12. Method according to Claim 11, **characterized in that**
- the metallic component is selected from the group consisting of copper, silver, gold, aluminium, iron, tin and alloys thereof, in particular copper and copper alloys,
- the ceramic component is selected from the group consisting of oxides, nitrides and carbide of aluminium, titanium and silicon and mixtures thereof, in particular aluminium oxide, aluminium nitride, titanium nitride, silicon nitride, silicon carbide and mixtures thereof,
- the metallic coating is formed from the metallic component of the metal-infiltrated ceramic.

## Revendications

1. Dispositif de connexion de source de courant (1) destiné à connecter électriquement une ou plusieurs sources de courant électrique (2, 2'), en particulier à interconnecter électriquement au moins deux sources de courant électrique (2, 2'), en particulier des unités à batteries, à accumulateurs ou à piles à combustible, dans lequel
le dispositif de connexion de source de courant (1) comprend au moins une unité de contact (3a, 3b, 3c ; 3) réalisée à partir d'une céramique infiltrée avec du métal pour connecter électriquement au moins un élément de contact (4a, 4b, 4a', 4b' ; 4) d'une source de courant électrique (2, 2') et
ladite au moins une unité de contact (3a, 3b, 3c ; 3) en céramique infiltrée avec du métal présente un revêtement métallique (6a, 6b, 6c) qui recouvre partiellement ou entièrement la surface de l'unité de contact (3a, 3b, 3c ; 3) en céramique infiltrée avec du métal,
**caractérisé en ce que**
la surface du revêtement métallique (6a, 6b, 6c) est partiellement ou entièrement recouverte d'une couche de protection contre la corrosion.

2. Dispositif de connexion de source de courant (1) selon la revendication 1, **caractérisé en ce que**
- le constituant métallique de la céramique infiltrée avec du métal est choisi dans le groupe constitué par le cuivre, l'argent, l'or, l'aluminium, le fer, l'étain et leurs alliages, en particulier le cuivre et des alliages de cuivre, et/ou
- le constituant céramique de la céramique infiltrée avec du métal est choisi dans le groupe constitué par des oxydes, des nitrures et des carbures d'aluminium, de titane et de silicium et leurs mélanges, en particulier l'oxyde d'aluminium, le nitrure d'aluminium, le nitrure de titane, le nitrure de silicium, le carbure de silicium et leurs mélanges.

3. Dispositif de connexion de source de courant (1) selon la revendication 1 ou 2, **caractérisé en ce que** ladite au moins une unité de contact (3) en céramique infiltrée avec du métal est réalisée sous la forme d'une partie d'une liaison en queue d'aronde, en particulier en forme de rainure en queue d'aronde.

4. Dispositif de connexion de source de courant (1) selon l'une des revendications 1 à 3, **caractérisé en ce que** le dispositif de connexion de source de courant (1) comprend au moins un moyen de liaison (5 ; 5a, 5b) qui est destiné à relier par complémentarité de force et/ou de forme une ou plusieurs unités de contact (3) en céramique infiltrée avec du métal à un ou plusieurs éléments de contact de source courant (4).

5. Dispositif de connexion de source de courant (1) selon l'une des revendications 1 à 4, **caractérisé en ce que** le revêtement métallique (6a, 6b, 6c) est réalisé à partir du constituant métallique de la céramique infiltrée avec du métal.

6. Source de courant électrique (2, 2'), en particulier unité à batterie, à accumulateur ou à pile à combustible,
dans laquelle la source de courant (2, 2') comprend au moins un élément de contact (4a, 4b, 4a', 4b' ; 4) réalisé à partir d'une céramique infiltrée avec du métal pour transférer le courant de la source de courant (2, 2') et ledit au moins un élément de contact (4a, 4b, 4a', 4b' ; 4) en céramique infiltrée avec du métal comporte un revêtement métallique recouvrant au moins partiellement la surface de l'élément de contact (4a, 4b, 4a', 4b' ; 4) en céramique infiltrée avec du métal,
**caractérisée en ce que**
la surface du revêtement métallique est partiellement ou entièrement recouverte d'une couche de protection contre la corrosion.

7. Source de courant (2, 2') selon la revendication 6, **caractérisée en ce que**
- le constituant métallique de la céramique infiltrée avec du métal est choisi dans le groupe constitué par le cuivre, l'argent, l'or, l'aluminium, le fer, l'étain et leurs alliages, en particulier le cuivre et des alliages de cuivre, et/ou
- le constituant céramique de la céramique infiltrée avec du métal est choisi dans le groupe constitué par des oxydes, des nitrures et des carbures d'aluminium, de titane, de silicium et leurs mélanges, en particulier l'oxyde d'aluminium, le nitrure d'aluminium, le nitrure de titane, le nitrure de silicium, le carbure de silicium et leurs mélanges.

8. Source de courant (2, 2') selon la revendication 6 ou 7, **caractérisée en ce que** ledit au moins un élément de contact (4) en céramique infiltrée avec du métal est réalisé sous la forme d'une partie d'une liaison en queue d'aronde, en particulier en forme de ressort à rainure en queue d'aronde.

9. Source de courant selon l'une des revendications 6 à 8, **caractérisée en ce que** le revêtement métallique est réalisé à partir du constituant métallique de la céramique infiltrée avec du métal.

10. Système de connexion de source de courant (1, 2, 2') comprenant au moins un dispositif de connexion de source de courant (1) et au moins une source de courant (2, 2'), **caractérisé en ce que** le système de connexion de source de courant (1, 2, 2') comprend
- au moins un dispositif de connexion de source de courant (1) selon l'une des revendications 1 à 5 et/ou
- au moins une source de courant (2, 2') selon l'une des revendications 6 à 9.

11. Procédé de fabrication d'une unité de contact (3a, 3b, 3c ; 3) en céramique infiltrée avec du métal destinée à un dispositif de connexion de source de courant (1) selon l'une des revendications 1 à 5 et/ou d'un élément de contact (4a, 4b, 4a', 4b' ; 4) en céramique infiltrée avec du métal destiné à une source de courant électrique (2, 2') selon l'une des revendications 6 à 9, comprenant les étapes de procédé suivantes :
a) la fabrication d'une préforme céramique poreuse à partir d'un constituant céramique,
b) l'infiltration de la préforme céramique poreuse, par exemple au moyen de presses de coulée ou par coulée sous pression, en particulier au moyen de la technologie d'infiltration sous pression de gaz ou de coulée par compression, avec un constituant métallique en fusion,
c) le revêtement du corps céramique infiltré avec du métal par un revêtement métallique qui recouvre partiellement ou entièrement la surface du corps céramique infiltré avec du métal,
d) le revêtement de la surface du revêtement métallique avec une couche de protection contre la corrosion qui recouvre partiellement ou entièrement la surface du revêtement métallique.

12. Procédé selon la revendication 11, **caractérisé en ce que**
- le constituant métallique est choisi dans le groupe constitué par le cuivre, l'argent, l'or, l'aluminium, le fer, l'étain et leurs alliages, en particulier le cuivre et des alliages de cuivre,
- le constituant céramique est choisi dans le groupe constitué par des oxydes, des nitrures et des carbures d'aluminium, de titane et de silicium et leurs mélanges, en particulier l'oxyde d'aluminium, le nitrure d'aluminium, le nitrure de titane, le nitrure de silicium, le carbure de silicium et leurs mélanges,
- le revêtement métallique est réalisé à partir du constituant métallique de la céramique infiltrée avec du métal.
